# EUROPEAN PATENT APPLICATION

(11) **EP 4 564 302 A1**
(43) Date of publication of application: **04.06.2025**
(21) Application number: 23383246.8
(22) Date of filing: 01.12.2023
(51) Int. Cl.: G06T 15/10, G06T 17/05, G06T 3/06, G06T 3/4038

(54) **COMPUTER-IMPLEMENTED METHOD FOR GENERATING A TWO-DIMENSIONAL FRONT ELEVATION IMAGE OF A STREET**

(71) Applicant: Berian Luna, Luis, 31190 Cizur Menor Navarra (ES)
(72) Inventor: Berian Luna, Luis, 31190 Cizur Menor Navarra (ES)
(74) Representative: Igartua, Ismael

(57) **Abstract**

A computer-implemented method for generating a two-dimensional front elevation image of a street, comprising a first stage (S1) in which a three-dimensional digital model of the street (S) is obtained, the three-dimensional digital model comprising three-dimensional graphical representations of buildings (B) of the street (S), the buildings (B) having facades (F), a second stage (S2) in which the facades (F) of the buildings (B) that are oriented towards the street (S) are identified, and a third stage (S3) in which the two-dimensional front elevation image of the street (S) is obtained from the three-dimensional digital model, the two-dimensional front elevation image of the street (S) being obtained by orthographic projection onto a projection plane (P) of the facades (F) of the buildings (B) that are oriented towards the street (S).

## Description

### TECHNICAL FIELD

The present invention relates to the graphical representation of a street in two dimensions from the information contained in a digital model in three dimensions.

### PRIOR ART

Digital mapping systems that allow a user to view and navigate geospatial data in an interactive digital environment are well known. Such an environment can be provided, for example, by an online mapping service (Web Mapping Service "WMS") that a user can access through a web browser.

Currently, online mapping services (Web Mapping Service WMS), such as Google Maps, Microsoft Maps, Apple Maps, or Open Street Maps, among others, allow a user to visualise, through a web browser, images of different geographic locations that have been obtained through satellites.

The images that can be displayed using online map services may comprise three-dimensional images, such as three-dimensional renderings or graphic representations of city buildings that have been obtained from aerial or satellite images taken from different angles. Such images may also comprise two-dimensional images, such as aerial views of city streets, or views of city streets (commonly referred to as "Street View") containing panoramic images captured at street level showing objects as they are actually seen. Such street-level or aerial images are represented with a conical projection system having vanishing points where the projections of the images converge.

Restitution in surveying refers to the process of recreating or reconstructing a map or a three-dimensional model of a terrain or geographic area from topographic data collected, such as aerial photographs, satellite measurements, or field survey data. This process involves the analysis and interpretation of the data to obtain an accurate representation of the terrain, including details such as elevations, contours, and natural or constructed features.

### DISCLOSURE OF THE INVENTION

The object of the invention is to provide a computer-implemented method for generating a two-dimensional front elevation image of a street, as defined in the claims.

The computer-implemented method of the invention comprises:
- a first stage in which a three-dimensional digital model of the street is obtained, the three-dimensional digital model comprises three-dimensional graphical representations of buildings of the street, the buildings having facades,
- a second stage in which the facades of the buildings that are oriented towards the street are identified, and
- a third stage in which the two-dimensional front elevation image of the street is obtained from the three-dimensional digital model, the two-dimensional front elevation image of the street being obtained by orthographic projection onto a projection plane of the facades of the buildings that are oriented towards the street.

The method of the invention makes it possible to obtain a two-dimensional front elevation graphic representation of a street from the information contained in a three-dimensional digital model. In this way, a front elevation of the facades of the buildings of the street can be obtained. The images obtained can be associated with an online mapping service (Web Mapping Service WMS), so that the user can view front elevation images of the streets of a city through a web browser. Unlike Street Views, which contain panoramic images taken at street level with a conical perspective that mimics human vision, the two-dimensional image obtained by the proposed method is an image without vanishing points, which is obtained by orthographic (orthogonal) projection of building facades onto a projection plane.

These and other advantages and features of the invention will become apparent in view of the figures and the detailed description of the invention.

### DESCRIPTION OF THE DRAWINGS

Figure 1 shows a flowchart of the method of the invention.
Figure 2 shows a graphical representation of an example of the method for obtaining the two-dimensional front elevation image of the street.
Figure 3 shows an example for orthographic projection of building facades.
Figure 4 is another example for orthographic projection of building facades using orthographic virtual cameras that are arranged in the 3D digital model.
Figure 5 shows a scheme for positioning the cameras in height in the 3D digital model.
Figure 6 shows a schematic representation of an example of a computer configured to implement the method of the invention.

### DETAILED DISCLOSURE OF THE INVENTION

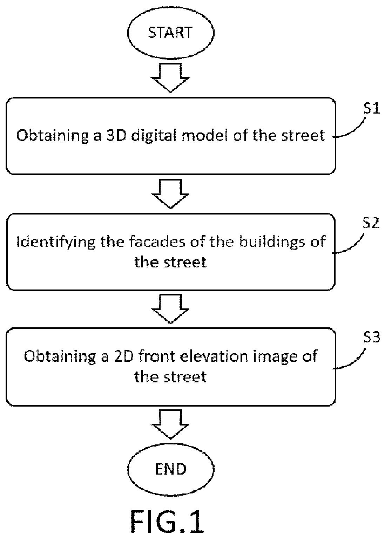

Figure 1 shows a flowchart of the computer-implemented method for generating a two-dimensional front elevation image of a street. The method comprises three stages S1, S2 and S3.

In the first stage S1 a three-dimensional digital model of the street S is obtained, the three-dimensional digital model comprises three-dimensional graphical representations of buildings B of the street S, the buildings B having facades F. In the second stage S2 the facades F of the buildings B that are oriented towards the street S are identified. In the third stage S3 the two-dimensional front elevation image of street S is obtained from the three-dimensional digital model, the two-dimensional front elevation image of street S is obtained by orthographic projection onto a projection plane P of the facades F of the buildings B that are oriented towards the street S.

In the context of the invention, a two-dimensional front elevation image, or 2D front elevation image, is a 2D image of the street that is contained in a vertical plane, which is perpendicular to the ground of the street.

A street is a public road in a built environment. The street may have two sides, with buildings on both sides of the street, so that the 2D front elevation image of the street S is obtained by orthographic projection onto the projection plane P of the facades F of the buildings B on one side of the street S that are oriented towards the street S. The facades of the buildings on the other side of the street may be represented by another 2D front elevation image obtained by the same method.

The three-dimensional digital model, or 3D digital model, can be obtained from an online mapping service (Web Mapping Service WMS), such as Google Maps, Microsoft Maps, Apple Maps, Open Street Maps. The 3D digital model contains graphical representations of various real-world objects associated with a geographic location. For example, the graphical representations may comprise 3D graphical representations of constructions that have been obtained from satellite images taken from different angles. For example, constructions include, but are not limited to, buildings, monuments, squares, fountains, parks, or other constructions that are part of a city.

More specifically, the 3D digital model, comprising the 3D graphical representations of the buildings on the street, can be obtained from a Web Map Tile Service "WMTS". For example, the 3D digital model can be obtained from the Map Tiles API of Google Maps which provides photorealistic 3D tiles of a given geographic location.

In a Web Map Tile Service (WMTS), the world map is divided into square-shaped tiles (quadrangular prism) containing geographic map data. The data is distributed hierarchically in a pyramid with different levels. On the first level there is a tile containing general map data, such as information about oceans and continents, and on the last level of the pyramid there are several tiles containing detailed data, such as information about streets, buildings, monuments, squares, fountains, parks, etc. In this way, the 3D graphical representations of the buildings on the street are obtained from the tile where the street is located.

The orthographic projection of the facades F of buildings B of street S comprises a set of projections of the facades, where the projections are orthogonal to the projection plane P and parallel to each other, so that the 2D front elevation image of the street has no vanishing points.

For example, the facades of the 3D graphical representations of the buildings B comprise a set of pixels or a point cloud, and each pixel or point of the facade, or a set of such pixels or points of the facade, is projected orthogonally to the projection plane P, and the projections of the facade pixels are parallel to each other.

Basically, the projection plane P on which the orthographic projection of the facades F of the buildings B is made is a plane substantially parallel to the facades F of the buildings B and perpendicular to the ground of the street S.

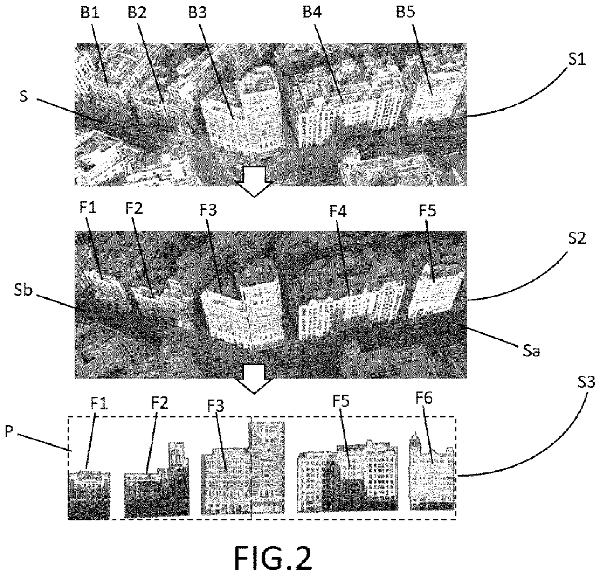

Figure 2 shows a graphical representation of an example of the method for obtaining the two-dimensional front elevation image of the street according to the stages defined in Figure 1. Figure 2 shows the 3D digital model of the street S obtained in the first stage S1 with the 3D graphical representations of five buildings B1 to B5 of a street S. Then, in the second stage S2, the facades F1 to F5 of the buildings B1 to B5 that are oriented towards the street S are identified. Finally, in the third stage S3, the facades F1 to F5 of the buildings B1 to B5 of street S are orthographically projected onto the same projection plane P and the 2D front elevation image of street S is obtained. In this way, the 2D image obtained represents in front elevation the facades of the buildings of the street on a common scale without vanishing points in the geometry of the objects in the image.

Preferably, to identify the facades F in the second stage S2, the method further comprises scanning the facades F of the buildings B to identify straight sections T on the facades F, each straight section T being contained in a plane, identifying sets of straight sections T, wherein each set comprises straight sections T that are contiguous with each other and that are contained in planes substantially coplanar with each other, and obtaining the orthographic projection of each set of straight sections.

Preferably, two contiguous straight sections T are contained in substantially coplanar planes when the angle between the two straight sections is between 0-15°.

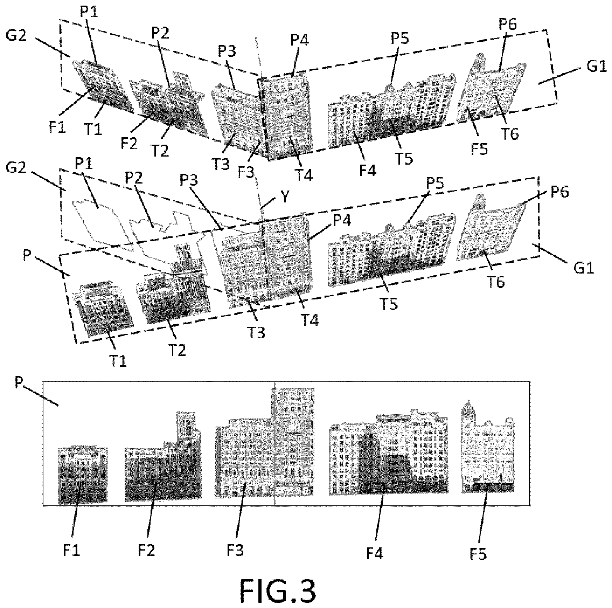

For example, Figure 3 shows the five facades F1 to F5, that are oriented towards the street, of the five buildings B1 to B5 of Figure 2. In these facades F1 to F5 of Figure 3, six straight sections T1 to T6 are identified. Facade F1 has a straight section T1 contained in a plane P1, facade F2 has another straight section T2 contained in another plane P2, facade F3 has two straight sections T3 and T4 contained in two respective planes P3 and P4, facade F4 has another straight section T4 contained in another plane P4 and facade F5 has another straight section T5 contained in another plane P5. Planes P4, P5 and P6 are co-planar with each other, so that straight sections T4, T5 and T6 form a first set of straight sections, and planes P1 to P3 are also co-planar with each other, so that straight sections T1, T2 and T3 form a second set of straight sections.

Thus, a first set of straight sections T4, T5 and T6, and a second set of straight sections T1, T2 and T3 are identified, the first set is contained in a first common plane G1 and the second set is contained in a second common plane G2. Subsequently, a tilting axis Y is defined between the two common planes G1 and G2, the first common plane G1 is set as the projection plane P, and the second set is tilted with respect to the tilting axis Y to project the second set onto the first common plane G1 and to obtain the orthographic projection of the two sets onto the projection plane P.

This example of the method shown in Figure 3 may be suitable when used on a street as shown in Figure 2. The street in Figure 2 is not straight, but has straight runs Sa and Sb separated by a change of path and the facades of each straight run are substantially parallel to their respective straight run of the street. Thus, each change of path of the street corresponds to a tilting axis, and there is a set of straight sections for each straight run of the street.

In Figure 3, for the sake of clarity, essentially one straight section T has been depicted for each facade, however, each facade may have multiple straight sections. For example, when the facades F of buildings B are scanned to identify straight sections T on the facades F, each straight section T may correspond to a point or pixel, or a set of points or pixels, from the 3D graphical representation of the building B. The range of pixels that make up the straight sections can be selected according to different criteria, such as the quality of the 3D digital model from which the 3D representations of the buildings in the street are obtained, or the configuration of the street.

Preferably, the orthographic projection of the facades F is obtained with at least one orthographic virtual camera C that is arranged in the three-dimensional digital model. An orthographic virtual camera is a camera that generates orthogonal and parallel to each other projections, of the image captured by the camera onto a projection plane, so that the image has no vanishing points.

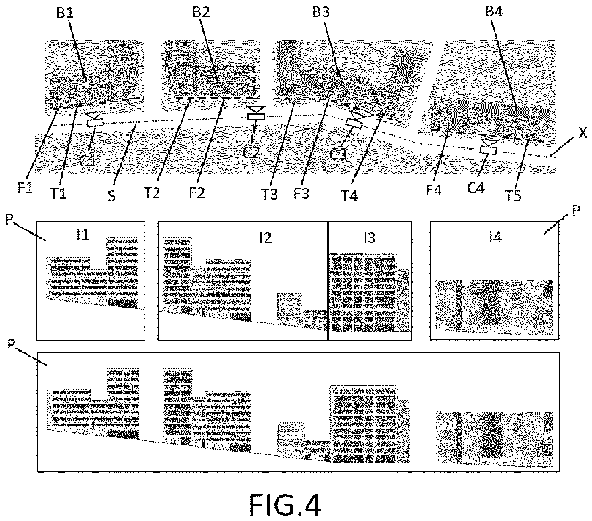

For example, when the street is straight and the facades of the buildings that are oriented towards the street are parallel to the street, a single orthographic virtual camera can be used to obtain the 2D front elevation image of the street. However, when the street is not straight, such as the street shown in Figure 2, or Figure 4, and/or the street has facades that are not parallel to the street, it may be necessary to use more than one orthographic virtual camera.

Even more preferably, the method further comprises obtaining the X axis of the street S and superimposing the X axis of the street S on the three-dimensional digital model, employing one orthographic virtual camera C for each set of straight sections T, arranging the orthographic virtual cameras C on the axis of the street S, obtaining an image I with each orthographic virtual camera C, wherein said image I comprises the orthographic projection of the set of straight sections T, and joining the images I of the orthographic virtual cameras C to obtain the two-dimensional front elevation image of the street S.

The image I obtained with each orthographic virtual camera C comprises a set of projections of the set of straight sections T on a projection plane P, wherein the projections are orthogonal to said projection plane P and parallel to each other, so that the image I has no vanishing points. Subsequently, when joining the images I of the orthographic virtual cameras C to obtain the 2D front elevation image of the street S, all the images I obtained with the orthographic virtual cameras C are contained in the same plane P.

As shown in Figure 4, the X-axis of the street S is an imaginary axis passing through the centre of the street. Like the 3D digital model, the X-axis of the street can be obtained from an online mapping service (Web Mapping Service WMS) such as Open Street Maps. The street axis is used as a reference point to arrange the cameras, which simplifies the method. In some cases, the street may have more than one imaginary axis, e.g. the street may have several roads separated by intermediate elements, such as a walkway, garden, or median barrier, so that each road in the street has an axis running through the centre of the road.

Each orthographic virtual camera C has an optical axis, and preferably, the optical axis is perpendicular to the set of straight sections T. In this way, the optical axis is perpendicular to each facade and has the advantage that the final representation obtains the resulting architectural geometry in true magnitude and therefore the measurements that can be made on the facade are appreciably accurate.

Alternatively, the optical axis of the orthographic virtual camera C is perpendicular to the X axis of the street S. This facilitates the operation and simplifies the method. Although the geometry is proportionate in this way, it may not represent the true magnitude of the facade elements, insofar as the street axis is not exactly parallel to the facades.

Additionally, some or all of the orthographic virtual cameras C can be arranged displaced with respect to the street axis S. For example, if there is an urban element in the street that does not allow the facade to be correctly viewed (trees, lampposts, sculptures), the camera is arranged displaced with respect to the axis in order to bring it closer to the facade, avoiding the urban element. An advantage of using an orthographic virtual camera is that the result of the orthogonal projection is independent of the distance to the object represented, as it represents a projection from infinity, which means that cameras can be placed at any distance from the facades.

Figure 4 shows four buildings B1, B2, B3 and B4 with four facades F1 to F4 that are oriented towards the street S. On the facade F1 of building B1 a straight section T1 is identified, on the facade F2 of building B2 a straight section T2 is identified, on the facade F3 of building B3 two straight sections T3 and T4 are identified, and on the facade F4 of building B4 a straight section T5 is identified. As can be seen, sections T2 and T3 are contained in substantially coplanar planes, so that an orthographic projection of both sections T2 and T3 can be obtained using a single camera C2. In this way, the X axis of the street is superimposed on the 3D digital model (which for reasons of clarity is represented as a plan image in the upper part of Figure 4), and four cameras C1, C2, C3 and C4 are placed on this X axis to obtain four images I1, I2, I3 and I4, with the orthographic projection of the straight sections T1 to T5. Camera C1 obtains an I1 image with the F1 facade of building B1, camera 2 obtains an I2 image with the F2 facade of building B2 and a part of the F3 facade of building B3, camera C3 obtains an I3 image of the other part of the F3 facade of building B3, and camera C4 obtains an I4 image of the F4 facade of building B5. Subsequently, images I1, I2, I3 and I4 are joined together to obtain the 2D front elevation image of the street.

As indicated above, for the sake of clarity, in Figure 4 practically one straight section T has also been depicted for each facade, however, each facade can have multiple straight sections. In this way, multiple cameras can be used to obtain multiple images of each facade. For example, each camera could capture a part of the facade with a size equal to one pixel. A pixel is the minimum unit of a camera capture.

Preferably all images obtained with the C cameras are equalised in scale. So that when the images are put together to obtain the 2D front elevation image of the street, the proportionality between the buildings in the street is maintained. The cameras can obtain the images directly at the same scale, or the cameras can obtain the images at different scales, and subsequently all the images obtained by the cameras are equalised in scale, and then the images are joined together to obtain the 2D front elevation image of the street.

Preferably, the orthographic virtual cameras C are arranged at the same height H with respect to the zero level of the street S, thus simplifying the joining of the images to obtain a 2D front elevation image with a proportionality between the buildings in the street similar to reality.

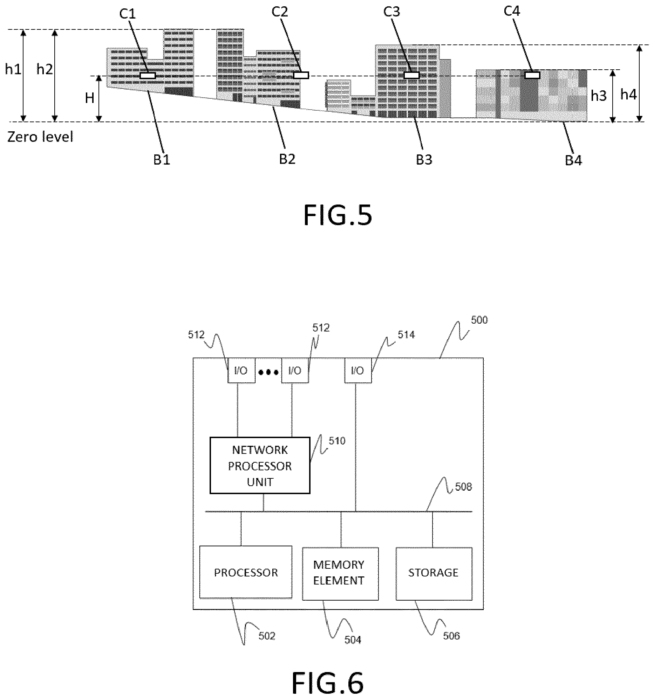

Even more preferably, the height h of each building B on the street S is determined with respect to the zero level of the street, the average of the height h of the tallest building on the street is obtained, this average being the height at which the virtual orthographic cameras C are arranged. Figure 5 shows a street with a slope, where the heights h1, h2, h3 and h4 of the four buildings B1, B2, B3 and B4 are determined. The height H at which the cameras C1, C2, C3 and C4 are arranged corresponds to the average height of the tallest building on the street, which in this case is building B1 or B2.

Additionally, some or all of the orthographic virtual cameras C may be arranged at different heights. For example, the street may comprise a building with a significantly higher, or lower, height than the rest of the buildings in the street, so it is preferable that the camera capturing this building is arranged at a different height from the rest of the cameras. Another example could be streets with steep slopes, so that the cameras are arranged at a progressive height proportional to the slope of the street. In any case, when the images are joined together to obtain the 2D front elevation image of the street, the images captured by the cameras are aligned in height so that the image obtained resembles reality.

The method further comprises determining the geolocation of a user and obtaining the 2D front elevation image of the street S from the user's geolocation. In this way, the 2D front elevation image can be used in an online mapping service (Web Mapping Service WMS), so that the user can view front elevation images of the streets of a city via a web browser. For example, the online mapping service may have a function to display the 2D front elevation image based on the user's geolocation, for example, based on the user's real-time GPS position, so that the 2D front elevation image changes as the user moves, or a geolocation selected by the user, such as selecting a path between two points in a city, or a specific address on a street in a city. This method does not generate parallax since at all times the projection is orthogonal with a point of view from infinity, which is not subjective.

Additionally, the 2D front elevation image of the street has metadata obtained from the 3D digital model, for example, the 2D front elevation image may contain metadata such as the GPS position, the street address, the name of the buildings, or the name of establishments located on the ground floor of the buildings and/or on the building itself.

The method additionally comprises adjusting image parameters, such as lighting or visual effects, saturation, contrast, masking or contour definition of facades. Additionally, besides building facades, the images may comprise other street constructions, such as monuments, squares, fountains, or parks. Furthermore, the images may represent other constructions captured by the cameras but which are not part of the street, such as buildings located on other streets that lie in a plane behind or oblique to the projection plane in which the facades are contained. These buildings can be represented in a blurred or attenuated form to generate an effect of depth.

The computer 500 used to implement the method of the invention may include one or more processors 502, one or more memory elements 504, storage 506, a bus 508, one or more network processor units 510 interconnected with one or more network input/output (I/O) interfaces 512, one or more I/O interfaces 514, and a computer program. Figure 6 shows a schematic representation of an example computer 500 configured to implement the method of the invention.

The computer program comprises a plurality of instructions, which when executed by the processor 502 cause the processor 502 to execute the steps of the method of the invention. In at least one example, the processor or processors 502 are at least one hardware processor configured to execute various tasks, operations, and/or functions for the computer 500 in accordance with software and/or instructions configured for the computer 500, for example, in the computer program.

In at least one example, the memory element(s) 504 and/or storage 506 are configured to store data, information, software, and/or instructions associated with the computer 500, and/or logic configured for the memory element(s) 504 and/or storage 506. In one example of the computer 500, the computer program is stored in any combination of memory element(s) 504 and/or storage 506.

In an example of the method of the invention, the 3D digital map is stored in a memory element 504 and/or storage 506.

In an example of the method of the invention, the images I obtained with the orthographic virtual cameras C are stored in a memory element 504 and/or storage 506.

In an example of the method of the invention, the 2D front elevation image of the street S is stored in a memory element 504 and/or storage 506.

In one example, the bus 508 may be configured as an interface that allows one or more elements of the computer 500 to communicate to exchange information and/or data.

In various embodiments, the network processor unit(s) 510 may enable communication between the computer 500 and other systems, entities, etc., via the network I/O interface(s) 512 (wired and/or wireless). The network processor unit(s) 510 and/or the network I/O interface(s) 512 may include interfaces suitable for receiving, transmitting, and/or otherwise communicating data and/or information in a network environment.

The I/O interfaces 514 allow input and output of data and/or information with other entities that may be connected to the computer 500. For example, the I/O interfaces 514 may provide a connection to external devices such as a keyboard, keypad, touch screen, and/or any other input and/or output device.

The computer program may include instructions that, when executed, cause the processor(s) 502 to perform operations, which may include, but are not limited to, providing general computer control operations, interacting with other entities, systems, etc. described herein, maintaining and/or interacting with stored data, information, parameters, etc. (e.g., memory element(s), storage, data structures, databases, tables, etc.); combinations thereof; and/or the like to enable execution of the operations necessary to implement the method of the invention.

The computer program may include instructions for using the network processor to interact with an online mapping service (Web Mapping Service WMS). For example, to interact with a Web Map Tile Service "WMTS".

In some cases, the computer program may be available via a non-transitory computer-readable storage medium (e.g., magnetic or optical media, magneto-optical media, CD-ROM, DVD, memory devices, etc.). In some cases, non-transitory computer-readable storage media may also be removable. Other examples may include optical and magnetic disks, USB flash drives and smart cards that can be inserted into and/or otherwise connected to a computer for transfer to another computer-readable storage medium.

The computer program may comprise a 3D modelling or design program such as Blender, or similar design programs that allow customisation of applications and may have specific addons to implement the method. The computer program may also comprise webGL-based programs such as Cesium that allow the generation of images in a pre-programmed manner or in real time on demand by the user.

The 2D front elevation images obtained with the method can be used in online mapping services (Web Mapping Service WMS), such as Google Maps, or in other functions such as real estate or tourism sector applications, GIS geographic information systems with applications in urban management, urban information or even military intelligence. On the other hand, it is possible to use images in the world of art and culture, by editing and applying filters and various effects on the image. It is also possible to generate bas-reliefs on the images for use by the visually impaired. Finally, each image can be associated with a token to create Non Fungible Tokens (NFT).

## Claims

1. Computer-implemented method for generating a two-dimensional front elevation image of a street, wherein the method comprises:
- a first stage (S1) in which a three-dimensional digital model of the street (S) is obtained, wherein the three-dimensional digital model comprises three-dimensional graphical representations of buildings (B) of the street (S), the buildings (B) having facades (F),
- a second stage (S2) in which the facades (F) of the buildings (B) that are oriented towards the street (S) are identified, and
- a third stage (S3) in which the two-dimensional front elevation image of the street (S) is obtained from the three-dimensional digital model, the two-dimensional front elevation image of the street (S) being obtained by orthographic projection onto a projection plane (P) of the facades (F) of the buildings (B) that are oriented towards the street (S).

2. Method according to claim 1, wherein for identifying the facades (F) the method additionally comprises:
- scan the facades (F) of the buildings (B) to identify straight sections (T) on the facades (F), each straight section (T) is contained in a plan,
- identifying sets of straight sections (T), wherein each set comprises straight sections (T) that are contiguous with each other and that are contained in planes substantially coplanar with each other; and
- obtain the orthographic projection of each set of straight sections.

3. Method according to claim 2, wherein two contiguous straight sections (T) are contained in substantially coplanar planes when the angle between the two straight sections is between 0-15°.

4. Method according to any one of the preceding claims, wherein the orthographic projection of the facades (F) is obtained with at least one orthographic virtual camera (C) which is arranged in the three-dimensional digital model.

5. Method according to the preceding claim, further comprising:
- obtain the street axis and superimpose the street axis on the three-dimensional digital model,
- use one orthographic virtual camera (C) for each set of straight sections (T),
- arrange the orthographic virtual cameras (C) on the axis of the street,
- obtain an image (I) with each orthographic virtual camera (C), wherein said image (I) comprises the orthographic projection of the set of straight sections, and
- join the images of the orthographic virtual cameras (C) to obtain the two-dimensional front elevation image of the street (S).

6. Method according to the preceding claim, wherein each orthographic virtual camera (C) has an optical axis, and the optical axis of the orthographic virtual camera (C) is perpendicular to the axis (X) of the street (S), or the optical axis of the orthographic virtual camera (C) is perpendicular to the set of straight sections (T).

7. Method according to any one of claims 5 to 6, wherein the images (I) obtained with the orthographic virtual cameras (C) are matched in scale.

8. Method according to any one of claims 5 to 7, wherein the orthographic virtual cameras (C) are arranged at the same height (H) with respect to the zero level of the street (S).

9. Method according to the preceding claim, wherein the height (h) of each building (B) in the street is determined with respect to the zero level of the street, the average height (h) of the tallest building in the street is obtained, this average being the height at which the orthographic virtual cameras (C) are arranged.

10. Method according to claim 2 or 3, wherein a first set of straight sections (T) and a second set of straight sections (T) are identified, the first set is contained in a first common plane (G1) and the second set is contained in a second common plane (G2), a tilt axis (Y) is defined between the two common planes (G1,G2), establish the first common plane (G1) as the projection plane (P), and tilt the second set with respect to the tilt axis (Y) to project the second set onto the first common plane (G1) and obtain the orthographic projection of the two sets onto the projection plane (P).

11. Method according to any one of the preceding claims, wherein the geolocation of a user is determined and the two-dimensional front elevation image of the street (S) is obtained from the geolocation of the user.

12. Method according to the preceding claim, wherein the geolocation of the user is a path between two points in a city.

13. Method according to any one of the preceding claims, wherein the two-dimensional front elevation image of the street (S) has metadata obtained from the three-dimensional digital model.

14. Computer (500) comprising a processor (502), a memory element (504), storage (506), a bus (508), a network processor unit (510) interconnected with at least one network input/output (I/O) interface (512), an I/O interface (514) and a computer program, the computer program (520) being stored in the memory element (504), and the computer program comprising a plurality of instructions which, when executed by the processor (502), cause the processor (502) to execute the steps of the method according to any one of claims 1 to 13.

15. A storage medium comprising a computer program, the computer program comprising a plurality of instructions which, when executed by a processor (502) of a computer (500), cause the processor (502) to execute the steps of the method according to any one of claims 1 to 13.
